Europäisches Patentamt

European Patent Office

Office européen des brevets

(11) Publication number: **0 168 532**
**B1**

# EUROPEAN PATENT SPECIFICATION

(45) Date of publication of patent specification: **22.03.89**

(21) Application number: **84201077.9**

(22) Date of filing: **20.07.84**

(51) Int. Cl.⁴: **C 04 B 32/00,** C 04 B 18/02 //
(C04B32/00, 18:04, 18:08,
22:00, 38:00,
40:02),(C04B18/02, 18:04)

(54) **A method for processing dredging mud, such as harbour mud and similar products.**

(43) Date of publication of application:
**22.01.86 Bulletin 86/04**

(45) Publication of the grant of the patent:
**22.03.89 Bulletin 89/12**

(84) Designated Contracting States:
**AT BE CH DE FR GB IT LI NL SE**

(56) References cited:
**EP-A-0 102 092**
**DE-A-2 450 104**
**DE-A-3 150 993**
**GB-A-1 587 023**
**US-A-2 933 796**

(73) Proprietor: **Rang, Marinus Cornelis**
**Oudwijkerveldstraat 104**
**NL-3581 JP Utrecht (NL)**
(73) Proprietor: **Schenk, Eugène Antoine Marie**
**Kolfstraat 36**
**NL-3311 XL Dordrecht (NL)**
(73) Proprietor: **Peters, Gerardus Joseph Marie**
**Daniel Stalpertstraat 101I Postbus 55609**
**NL-1007 NC Amsterdam (NL)**
(73) Proprietor: **Schouten, Chrétien Jean Joseph**
**Hélene**
**Badorfstraat 19**
**NL-3962 CB Wijk bij Duurstede (NL)**
(73) Proprietor: **Maussen, Willem Maria Antonius**
**Aloysius**
**Tongersestraat 60**
**NL-Maastricht (NL)**

(72) Inventor: **Cool, Bert**
**Buorren 24**
**NL-9012 DH Rauwerd (NL)**
Inventor: **Rang, Marinus Cornelis**
**Oudwijkerveldstraat 104**
**NL-3581 JP Utrecht (NL)**
Inventor: **Schenk, Eugène Antoine Marie**
**Kolfstraat 36**
**NL-3311 XL Dordrecht (NL)**

Courier Press, Leamington Spa, England.

**EP 0 168 532 B1**

(72) Inventor: **Peters, Gerardus Joseph Marie**
**Daniel Stalpertstraat 101 Postbus 55609**
**NL-1007 NC Amsterdam (NL)**
Inventor: **Schouten, Chrétien Jean Joseph**
**Hélene**
**Badorfstraat 19**
**NL-3962 CB Wijk bij Duurstede (NL)**


(74) Representative: **Lips, Hendrik Jan George, Ir.**
**HAAGSCH OCTROOIBUREAU Postbus 97702**
**NL-2509 GC 's-Gravenhage (NL)**

## Description

The invention relates to a method for processing dredging mud, such as harbour mud, possibly mixed with industrial sludge, purification sludge and similar materials, or with powdery combustion residues, such as fly-ash, wherein the sludge is converted into a plastic mass by drying and/or mixing, or is converted into a dry powdery semi-product during which the greater part of the organic material present in the basic material is burnt, which mass or powder may be brought into the shape of more or less coarse pieces, which pieces are subsequently made to ceramic bodies by drying and baking.

The invention is aimed at obtaining an environmentally safe ceramic product, that can be applied in road construction, in the construction of service-pipe streets and of dikes. In addition such a product may also be used as light weight artificial gravel in the preparation of concrete and as starting material in the manufacture of insulating construction blocks or construction modules, with high demands to the dimensional accuracy.

The storage of dredging mud, such as of harbour mud, of industrial sludge, of sludge obtained from sewage water clarification installations and similar materials and of powdery combustion residues as hitherto customary, is creating more and more problems. These problems are caused mainly by the pollution of the above mentioned materials with many organic and inorganic, environmentally critical substances. Thereby and by the highly increased amounts of the above mentioned materials it is not always possible to make use of holes already present in the soil, such as for example those created by the excavation of gravel, sand or clay, so that for the storage of the materials concerned grounds have to be withdrawn from their original destination. By the above mentioned pollutants one has to be accurate in the storage and dumping of the sludge and fly-ashes into the sea is considered unacceptable by environmentalists.

A method of the type as indicated above is described in DE-A-3,150,993. That describes the manufacture of a pelletised material wherein it is essential that a surface skin is quickly formed around the pellets thus preventing the toxic organic compounds from exuding. Thus a product is made, wherein these compounds may still be present. Besides this it is possible that under the above mentioned combustion and sintering conditions very toxic dibenzofurans and dioxins are produced. Moreover the presence of carbon during the further sintering of the pellets will cause reduction of the metals present in the pellets. It has appeared, however, from experiments that products baked under reducing conditions show a very poor behaviour in leaching, so that the ceramic product obtained is not environmentally safe.

Now the present invention intends to avoid this problem and provides to that purpose that the pieces are heated in an oven with a gradual heating up to about 700°C during which excess of oxygen is present in said over either by supplying extra air for combustion or by injection of pure oxygen, after which the pieces are heated to a temperature of about 1100°C causing sintering.

The product obtained according to the present method is safer to the environment, which is explained by the fact, that metals are much more mobile in a reduced form, than in an oxidised form, as is obtained according to the present invention. So the premature formation of a molten skin around the pellets, as aimed at according to the said German patent application, will have to be prevented.

Besides this no forming of dibenzofurans and dioxins will take place in the presence of sufficient oxygen, as also has appeared by research.

The heavy metals and other toxic trace-elements in the products obtained according to the invention, are immobilised so that they may not, or only very slow, land in the environment. The organic compounds, possibly present in the starting materials, will be completely disintegrated during the production process.

By the sintering according to the present invention an important decrease of the specific surface of the product is obtained such that leaching processes, if any, are considerably retarded. Further a chemical-mineralogical fixation is obtained as a result of the compounds formed between the metals and the aluminium silicates being present.

The method according to the present invention can be applied for the processing of dredging mud, sludge from sewage-water clarification installations, industrial sludges, and fly-ashes such as fly-ash from installations fired with pulverised coal and fly-ash from public incinerators.

In this connection dredging mud may be considered as unmatured river- or sea-clay, which differs, however, from the clay as customary used in the ceramic industry, in that dredging mud is oversaturated with water, has colloidal properties, has a relatively high content of organic substances, varying from 5 to at most 20% and may have a relatively high lime content of at most 20%.

It is further of importance for the treatment that the dredging mud comprises about 2% pyrite and maximum about 3% halite and may be polluted with organic and inorganic, environmentally critical substances, such as residual oil, chlorinated hydrocarbons, aromatic compounds and heavy metals.

Sludge derived from sewage water purification installations is formed during the clarification of sewage water and comprises after mechanical dewatering about 70% of water, based on the dry matter. The dry matter is mainly organic material and has a fibrous structure. In addition it may comprise a high amount of lime, up to a maximum of about 5%. For the processing it is still further of importance that these sludges are frequently polluted by heavy metals.

Industrial sludges are formed in many industrial processes, such as in the galvanic industry, in the steel industry and in mining activities and those sludges can not be defined uniformally. Frequently they comprise a heavy load of toxic trace elements, among which heavy metals.

Fly-ash is a pulvery combustion residue formed in numerous burning processes. Fly ash of installations fired with pulverized coal consists of glass pellets, of which more than 80% are smaller than 40μm. Oxides of silicon and aluminium and some other metal oxides form the major part of fly-ash. The large outer surface of the fly-ash is the cause of the phenomenon that trace elements condense from the combustion gases on the surface of the fly-ash, thus causing an enrichment of the trace elements naturally present in coal. The fly-ash also comprises still about 5% uncombusted carbon and a small quantity of soluble salts.

Fly-ash from public incinerators has a less homogeneous composition and will comprise uncombusted residues of the refuse, such as small fragments of paper, plastic and glass, next to the earlier mentioned glass pellets. This fly-ash may comprise substantial amounts of heavy metals and small amounts of newly formed, very toxic organic compounds, such as dioxins and dibenzofurans. Reference can be made to the report P84-1 of the Section Pathology-Toxicology of the State University of Utrecht, in which the presence of the above mentioned toxic organic compounds in these fly-ashes is demonstrated.

In particular arrangement can be made in that context, that the gases and vapours released during drying and baking are collected, subjected to after burning and clarified. Thus in carrying out the method according to the present invention pollution of the environment will be prevented to a high degree. According to a preferred embodiment of the method the vapours and gases thus created will be drawn off along the cooler part of the oven and be heated subsequently in an afterburner up to a maximum of 1200°C. By this a favourable temperature profile can be obtained in the furnace.

It is also possible to guide the vapours and gases formed through a rainingtank, during which they are cooled to a temperature below 100°C so that a part of the vapours condenses, whereafter the remaining gases are fed to an afterburner. A part of the detrimental components, among which chlorine and fluorine, will rain out together with the water, whereafter the water, thus obtained is passed to a water clarification installation. By this the mass of the gases which have to be handled in the afterburner is smaller. An additional advantage is that the heat released by the condensation of the vapours can be recovered and be used for heating of buildings.

When applying the method it may be advisable to add to the dredging mud or a mixture made therefrom, a ulexate in a quantity of 1 to 10% by weight, based on the dry matter of the mixture. The advantages of the addition of a ulexate are an increased sintering of the product at an identical temperature and a better binding of the soluble salts and halogens, such as chlorides and fluorides, whereby the emissions of these compounds during the baking process are reduced to a considerable degree, thus less high demands have to be set for the flue-gas purification. Moreover the migration of soluble salts during drying is counteracted, whereby a better glazed skin is created on the outside and the product better will withstand leaching and the water absorption will be decreased. This provides for an enlarged applicability of the product obtained.

The use of ulexates in pottery is known as such from the article "Colloïdale Ulexaten voor Pottenbakken in een Nieuw Tijdperk" in "KLEI EN KERAMIEK", nr. 29, November/December 1979.

On application of the method according to the present invention it is also possible to foam the dredging mud or the mixture prepared therefrom, whereby especially useful light weight products can be obtained.

The method according to the present invention is very suitable to manufacture various useful products while removing materials which as such were hardly usable. These products e.g. are tiles, construction blocks, artificial gravel and chamotte.

The method according to the present invention can be carried out in the following manners.

1. The dredging mud supplied is first of all disposed of the excess of water in a so-called decantation basin. Further dehydration is achieved by passing the specie through a screen-conveyer press whereby the water content can be reduced to about 50% based on the dry matter, at which moisture content the specie is properly pressable. Another possibility for lowering of the moisture content is to allow the dredging mud to undergo a physical ageing in the decantation basins, whereby after at most one year the desired moisture content can be achieved.

Another possibility for achieving this moisture content is by mixing the dredging mud with a relatively dry, non-plastic additive or with mixtures of such substances. To that end fly-ash can be used in particular to a maximum of seven parts per one part of dredging mud, both based on the dry matter.

2. When the dredging mud has obtained the desired moisture content, is is homogenized by means of kneading, grinding or sifting or a combination thereof.

3. For the manufacture of artificial gravel or an other granulated product the basic material may be passed through an extruder, whereafter the strands are cut into pieces. The pieces thus obtained may be rounded off in a drum to the desired degree of rounding off. Another manner for obtaining pellets is passing the basic material through a so-called granulation disc or drum, providing a well rounded-off pellet.

4. The pellets obtained are dried subsequently. This may occur in the same oven as used for baking, such as a rotating drum oven. It is also possible to carry out drying in a separate drum oven or in a grid-oven, or to make use of a belt- dryer or drum-dryer. Flue-gases obtained from elsewhere provide the heat required for the evaporation. The gases and vapours released by the evaporation should be collected, treated by afterburning and subsequently be purified in order to prevent that the environmentally critical components of these gases would be released into the atmosphere.

According to another embodiment of the invention the basic material obtained according to 1) is passed directly into a so-called granulation drum oven. This is a drum oven in which bundles of chains have been placed and in which the basic material is divided into small aggregates, whereafter the rotating movement of the drum causes a rounding-off of these aggregates. Such an oven shows much similarity with the one used in the production of wet cement. In this granulation drum oven the shaping, the drying and the partial oxidation of the product thus take place. The oven is brought to a temperature of 300 up to a maximum of 700°C, during which an excess of oxygen should be present in the oven atmosphere all the time.

5. The pellets obtained under 4) are heated in a drum oven, with a gradual heating up to about 700°C. During this phase the greater part of the organic matter and the pyrite present are incinerated. It is thus of the greatest importance that during this period an excess of oxygen is present in the oven atmosphere, in order to counteract the formation of dioxins and benzofurans. This excess of oxygen can be achieved by the supply of extra air for combustion or by injection of pure oxygen. The injection of pure oxygen provides the advantage that gases, not required for the incineration, such as nitrogen, do not have to be heated as well, and the complete process can be controlled better.

6. The pellets are then heated to a temperature of about 1100°C causing sintering. This high temperature is necessary in order to provide good physical and mechanical properties to the product. In addition this high temperature is required in order to decompose the very toxic dibenzofurans and dioxins which possibly are present in the basic material. To that end, however, the oven atmosphere should contain an excess of oxygen. This excess of oxygen is also necessary to provide the product with favourable leaching-out properties with respect to toxic trace-elements.

7. After sintering has taken place, the pellets are placed in a cooler, for example a multi-stage fluidised bed cooler, where the product dissipates its heat to the surrounding air, which is thereafter supplied to the oven as primary or secundary air for heating. In this way an important saving of energy can be achieved. Other coolers may be used as well, such as a single-stage fluidised bed cooler, a belt cooler or a planetary cooler.

8. The flue-gases formed in 5) and 6) are drawn off along the cooler part of the oven, providing a favourable temperature profile in the oven. Subsequently the flue-gases are passed through a heat-exchanger in order to supply heat to these gases, to be heated further to a maximum of 1200°C in an afterburner. Thereafter the flue-gases are passed again into the heat exchanger, where they release their heat. The detrimental components of the flue-gases, such as fluorine, chlorine, sulphur dioxide and possible present trace elements are removed by means of a flue gas purification installation. Also fine dust particles are thus removed. For this flue-gas purification use can be made of a dry or semi-dry injection of comminuted lime, followed by a separation thereof through a cloth-filter. Application of such a filter increases the efficiency of the flue-gas purification, both with respect to components such as fluorine, chlorine and sulphur dioxide, as well as with respect to the possibly present heavy metals. With respect to the latter mentioned components it is advisable to keep the temperature in the cloth-filter at a level as low as possible, but at any rate above 100°C, as otherwise a here undesired condensation of water would occur.

If desired use can be made of a so-called rainingtank, through which the gases are passed after they have left the oven. In this tank the gases are cooled to a temperature below 100°C, thus causing condensation of water. A part of the detrimental components, among which chlorine and fluorine, are rained out together with the water. The water thus obtained is fed to a water purification installation. The additional advantage is that heat, which is released by the condensation of water, can be recovered and be used for example for room heating.

9. The method according to the invention may be carried out in such a manner, that the pellets obtained by 3) are passed directly into a multi-stage fluidised bed oven. In the upper chamber of the oven drying of the pellets takes place, in the subsequent chamber pre-heating of the pellets, followed by oxidation of the organic substances present in the pellets. In the next chamber the sintering takes place. In the lower chamber a cooling of the product takes place. The advantage of the application of such an oven is the fact, that drying, oxidation, sintering and cooling takes place in the same oven, whereby an optimal yield of the fuel can be obtained. The process is moreover good controlable, as the residence time and the atmosphere in each room can be adjusted separately, whereby the possible injection of oxygen may take place very effectively.

For the manufacture of light weight construction modules and construction modules wherein high demands are made to the dimensional accuracy, dredging mud as such is unsuitable. This is caused by the very high dry shrink of the specie which occurs as a consequence of the high percentage of organic substances. In the manufacture of products of fixed shape it is then necessary to dry the organic substance irreversibly, or to burn it. This is also necessary when a light weight product is aimed at by means of foaming of the basic material or when one wants to use very watery muds, such as dredging mud or mud obtained from sewage water clarification installations, without preceding mechanical dewatering or physical ageing.

On application of the method one can proceed as follows.

10. The dredging mud, after having been adjusted to the proper moisture content according to 1), is passed into a so-called spray-dryer, whereby the basic material is dried and is possibly calcined, the organic substance being burned for the greater part. Also it has been found possible to dry the dredging mud in a fluidised bed oven and to calcine subsequently. The gases and vapours released during drying and calcination are fed to an after burner and purified according to the method of 8).

11. Hereafter the product may be given a specific shape by the application of so-called drypress technology. The calcined dredging mud, if desired, may be mixed with dredging mud which optionally has been dehydrated in order to simplify moulding.

12. The moulding thus obtained may be baked by application of the customary technology, while the flue-gases have to be treated according to the method of 8).

13. By addition of a foaming or swelling agent an extremely porous and light weight product can be made. To this end the product obtained in 10) is blended with the required additives, optionally with addition of water. Subsequently the product is shaped and baked according to the method of 12).

14. In the method according to the invention the dredging mud can be blended with industrial sludge, such as is formed for example in the metallurgical industry. When the mass, as obtained after blending, is treated in accordance with the method described, a product will be obtained that complies with the requirements for environmental safety. This is caused by the aluminium silicates present in the dredging mud, that will immobilise the toxic trace elements possibly present in the industrial sludge.

15. The dredging mud can be blended also with sludge derived from sewagewater purification installations, in particular those which are contaminated with heavy metals or other toxic compounds. When the mass, obtained after blending, is treated in the manner described above, a product is obtained again, that will comply with the requirements for environmental safety. This is caused in that the toxic trace elements, possibly present in the sludge, will be immobilised by the aluminium silicates present in the dredging mud and in that the toxic organic compounds possible present, will be decomposed into environmentally harmless compounds.

16. The dredging mud may also be blended with fly-ash, in particular that derived from public incinerators. The last mentioned fly-ash may be contaminated with dioxin and benzofurans. It has been shown that when the mass, obtained by blending, is treated in the manner described above, the dioxins and benzofurans present in the basic material will decompose completely into environmentally harmless compounds.

17. In order to counteract the emission of chlorides and fluorides, the basic material may still be blended with soda or natron lye, in a quantity up to at most 5% by weight, based on the dry matter. Reference can be made in this context to the articles: "Thermal Treatment of heavy-metal-containing wastes." in "Conservation and Recycling" vol. 4, 1981, pp. 29-38 and "De thermische behandeling van afvalstoffen, welke zware metalen bevatten", CTI-TNO-report, ref. nr. 77-09950 (1977).

## Claims

1. A method for processing dredging mud, such as harbour mud, possibly mixed with industrial sludge, purification sludge and similar materials, or with powdery combustion residues, such as fly-ash, wherein the sludge is converted into a plastic mass by drying and/or mixing, or is converted into a dry powdery semi-product during which the greater part of the organic material present in the basic material is burnt, which mass or powder may be brought into the shape of more or less coarse pieces, which pieces are subsequently made to ceramic bodies by drying and baking, characterized in that the pieces are heated in an oven with a gradual heating up to about 700°C during which excess of oxygen is present in said oven either by supplying extra air for combustion or by injection of pure oxygen, after which the pieces are heated to a temperature of about 1100°C causing sintering.

2. A method according to claim 1, characterized in that the gases and vapours released during the drying or baking are collected, subjected to afterburning and purified.

3. A method according to claim 2, characterized in that the vapours and gases formed are drawn off along the cooler part of the oven and are heated subsequently in an afterburner up to a maximum of 1200°C.

4. A method according to claim 2, characterized in that the vapours and gases formed are passed through a raining tank during which they are cooled to a temperature below 100°C, so that a part of the vapours condenses, whereafter the remaining gases are fed to an afterburner.

5. A method according to one of the preceding claims, characterized in that a ulexate is added to the dredging mud or a mixture made thereof, in a quantity of 1 to 10% by weight, based on the dry matter of the mixture.

6. A method according to one of the preceding claims, characterized in that the dredging mud or the mixture made thereof is foamed.

7. Products, such as tiles, construction blocks, artificial gravel and chamotte, obtained with application of the method according to one or more of the preceding claims.

## Patentansprüche

1. Verfahren zur Verarbeitung von Baggerschlamm, beispielsweise Hafenschlamm, gegebenenfalls im Gemisch mit Industrieschlamm, Klärschlamm und ähnlichen Stoffen oder mit fein verteilten Verbrennungsrückständen, wie Flugasche, in welchem der Schlamm durch Trocknen und/oder Vermischen entweder in eine verformbare Masse oder aber in ein trockenes Halbfertigprodukt umgewandelt wird, wobei der größere Teil des in dem Ausgangsstoff enthaltenen organischen Anteils verbrannt wird und die genannte Masse beziehungsweise das fein verteilte Material zu mehr oder minder groben Stücken verformt wird, welche anschließend durch Trocknen und Brennen zu Keramikkörpern verarbeitet werden, dadurch gekennzeichnet, daß die Materialstücke in einem Ofen mit gradueller Erwärmung bis zu etwa 700° C erwärmt werden, wobei der Ofen einen Sauerstoffüberschuß aufweist, entweder aufgrund der zusätzlichen Zufuhr von Luft für die Verbrennung oder durch Einspritzung von reinem Sauerstoff, woraufhin die genannten Materialstücke dann zur Sinterung auf eine Temperatur von etwa 1100° C erwärmt werden.

2. Verfahren nach Anspruch 1, dadurch gekennzeichnet, daß die während des Trocken- und Brennvorgangs freigesetzten Gase und Dämpfe gesammelt, nachverbrannt und gereinigt werden.

3. Verfahren nach Anspruch 2, dadurch gekennzeichnet, daß die entstandenen Dämpfe und Gase durch den kühleren Teil des Ofens abgezogen und anschließend in einem Nachbrenner auf eine maximale Temperatur von 1200° C erwärmt werden.

4. Verfahren nach Anspruch 2, dadurch gekennzeichnet, daß die entstandenen Dämpfe und Gase zur Abkühlung auf eine Temperatur von unter 100° C durch einen Beregnungsbehälter geleitet werden, so daß ein Teil der Dämpfe kondensiert, wonach die verbleibenden Gase einem Nachbrenner zugeführt werden.

5. Verfahren nach einem der vorangehenden Ansprüche, dadurch gekennzeichnet, daß dem Klärschlamm ein Ulexit oder ein aus diesem gebildetes Gemisch in einer Menge von 1 bis 10 Gewichtsprozent, bezogen auf den Trockenanteil des Gemischs, zugeführt wird.

6. Verfahren nach einem der vorangehenden Ansprüche, dadurch gekennzeichnet, daß der Klärschlamm beziehungsweise das aus diesem gebildete Gemisch geschäumt wird.

7. Produkte, beispielsweise Ziegel, Bausteine, Kunstkies und Schamotte, erhältlich durch Anwendung des Verfahrens nach einem oder mehreren der vorangehenden Ansprüche.

## Revendications

1. Procédé de traitement d'une boue de dragage, telle qu'une boue de port, éventuellement mélangée avec une boue industrielle, une boue de purification et des matières similaires, ou avec des résidus de combustion pulvérulente, tels que la cendre volante, dans lequel la boue est transformée en une masse plastique par séchage et/ou mélange, ou est transformée en un semi-produit pulvérulent sec, étape pendant laquelle la plus grande partie de la matière organique présente dans la matière de base est brûlée, la masse ou poudre peut être amenée sous la forme de morceaux plus ou moins grossiers, les morceaux sont ultérieurement transformés en corps céramiques par séchage et cuisson, caractérisé en ce que les morceaux sont chauffés dans un four avec chauffage progressif jusqu'à environ 700°C, au cours duquel de l'oxygène en excès est présent dans ce four, soit en envoyant de l'air supplémentaire pour la combustion, soit par injection d'oxygène pur après quoi les morceaux sont chauffés à une température d'environ 1100°C, ce qui provoque leur frittage.

2. Procédé suivant la revendication 1, caractérisé en ce que les gaz et les vapeurs dégagés au cours du séchage ou de la cuisson sont recueillis, soumis à une combustion secondaire et purifiés.

3. Procédé suivant la revendication 2, caractérisé en ce que les vapeurs et gaz formés sont extraits le long de la partie la plus froide du four et sont chauffés ultérieurement dans un brûleur secondaire jusqu'à un maximum de 1200°C.

4. Procédé suivant la revendication 2, caractérisé en ce que les vapeurs et gaz formés sont envoyés à travers un réservoir à arrosage, en même temps qu'ils sont refroidis à une température inférieure à 100°C, de telle sorte qu'une partie des vapeurs se condense, après quoi les gaz restants sont envoyés dans un brûleur secondaire.

5. Procédé suivant l'une des revendications précédentes, caractérisé en ce qu'un ulexate est ajouté à la boue de dragage ou à un mélange fabriqué à partir de celle-ci, dans une quantité de 1 à 10% en poids, par rapport à la matière sèche du mélange.

6. Procédé suivant l'une des revendications précédentes, caractérisé en ce que la boue de dragage ou le mélange fabriqué à partir de celle-ci est expansé.

7. Produits, tels que tuiles, blocs de construction, gravier artificiel et chamotte, obtenus par application du procédé suivant une ou plusieurs des revendications précédentes.